# EUROPEAN PATENT SPECIFICATION

(11) **EP 3 037 241 B1**
(45) Date of publication and mention of the grant of the patent: **08.07.2020**
(21) Application number: 15200664.9
(22) Date of filing: 17.12.2015
(51) Int. Cl.: B29C 48/305, B29C 48/49, B29C 48/25, B29C 48/30, B29D 30/52, B29C 48/21, B29C 48/07

(54) **EXTRUDER DIE ASSEMBLY AND METHOD OF MANUFACTURING A TIRE TREAD**
EXTRUDERMUNDSTÜCKANORDNUNG UND VERFAHREN ZUR HERSTELLUNG EINER REIFENLAUFFLÄCHE
ENSEMBLE FORMANT FILIERE D'EXTRUSION ET PROCÉDÉ DE FABRICATION UNE BANDE POUR LES PNEUS

(30) Priority: 23.12.2014 US 201462095826 P
(43) Date of publication of application: 29.06.2016
(73) Proprietor: The Goodyear Tire & Rubber Company, Akron, Ohio 44316 (US)
(72) Inventor: MEUNIER, Michel Jacques Albert Ghislain, B-6674 Gouvy (BE); DHEUR, Jean Luc, 6700 Arlon (BE)
(74) Representative: Kutsch, Bernd

(56) References cited:
- CN-A- 101 704 294
- CN-A- 103 935 004
- JP-A- 2004 230 593
- JP-A- 2007 223 271
- US-A1- 2005 208 167

## Description

### Field of the Invention

The invention relates to the field of tire manufacturing, and more particularly to extrusion of rubber.

### Background of the Invention

In tire manufacturing, numerous tire components are formed of a plurality of rubber parts. Rubber tire components such as the tire apex, sidewall, and tread are formed by an extrusion process. One type of extruder typically used in tire manufacturing is a screw extruder. The screw extruder typically has a long chamber with a screw centered in the channel, wherein the screw masticates the rubber. The end of the channel typically has a die having a hole formed therein. The shape of the hole dictates the cross-sectional shape of the rubber part to be made. The extruder pressure forces the rubber through the small die hole forming the part to be made in a continuous manner. The desired rubber part is obtained by cutting the extruded part to a given length.

The invention relates to coextrusion of tire components. Co-extrusion is the manufacture of a multi-layered rubber composite in a single operation. The multi-layered rubber composite is composed of at least two individual rubber compositions configured as rubber layers, wherein each rubber layer extends for instance through the rubber composite thickness from one side to another or the other opposing side. The multi-layered rubber composite is prepared by co-extruding at least two individual rubber compositions, via an individual extruder for each rubber composition, to an internal cavity of a head. The head is comprised of an internal cavity which contains flow channels for guiding the at least two individual rubber compositions to form said multi-layered rubber composite through a splice bar and die, forming a composite strip in a single manufacturing step.

The problem of smear may occur as a side effect of co-extrusion. Smear is the appearance of a thin layer (usually a few microns) of a compound at an unexpected location of the multi-layered rubber composite. Smear is generally undesired, and is usually the result of rubber flow at junction or gaps between parts of the co-extrusion equipment. Thus it is desired to have improved manufacturing equipment which substantially reduces or eliminates smear in component co-extrusion manufacturing.

US-A-2005/208167, CN-A-103 935 004, JP-A-2004-230593, JP-A-2007-223271 and CN-A-101 704 294 each describe an extruder assembly in accordance with the preamble of claim 1.

### Summary of the Invention

The invention relates to an extruder assembly in accordance with claim 1 and to a method in accordance with claim 13 or 15 respectively.

Dependent claims refer to preferred embodiments of the invention.

### Brief Description of the Drawings

The invention will be described by way of example and with reference to the accompanying drawings in which:
FIG. 1 is a cross-sectional view of a schematic of an extruder head shown with the outlets of extruders A, B, C, and D;
FIG. 2 is an exploded perspective view of a first embodiment of a splice bar and die assembly for use with the extruder head or extruder system of FIG. 1;
FIG. 3 is a side cross-sectional view of a second embodiment of a splice bar design and extruder head assembly for use with the extruder head or extruder system of FIG. 1; and
FIG. 4 is a close-up rear view of the splice bar of the second embodiment of the present invention.

### Detailed Description of Example Embodiments of the Invention

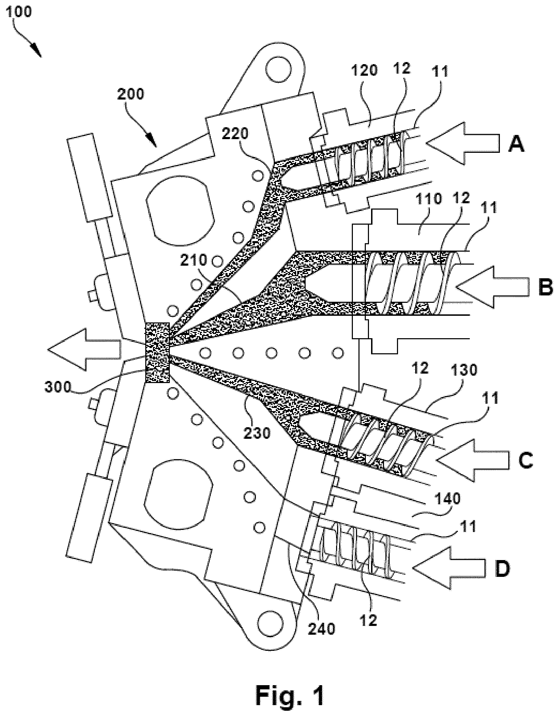

Figure 1 illustrates an extruder system 100 for forming a multi-layered rubber composite in a single operation.

Preferably, the multi-layered rubber composite is a multi-layered tire tread rubber composite comprising a tread cap layer and a tread base layer and/or a tread cap layer and tread wings.

The multi-layered tire tread rubber composite may comprise a first or radially outer tread cap layer and a second, radially inner tread cap layer different from the first tread cap layer, and optionally also one or more tread wing layers. The tread base layer is located radially inward of the radially innermost tread cap layer.

Alternatively, the multi-layered tire tread rubber composite may comprise a first tread cap layer and a second tread cap layer different from the first tread cap layer, wherein the first tread cap layer is axially adjacent the second tread cap layer, optionally a further tread cap layer axially inward of the first and second tread cap layer, optionally or additionally a tread base layer radially inward of the radially innermost tread cap layer, and optionally also one or more tread wing layers. The tread base layer, if present, is located radially inward of the radially innermost tread cap layer.

The extruder system includes at least two extruders 110, 120, preferably at least 3 or 4 extruders 110, 120, 130, 140. Screw extruders are typically utilized, although also ring extruders may be utilized. Figure 1 illustrates a piggy back type extruder system, wherein there are four screw extruders 110, 120, 130 and 140 used to form the multi-layered composite. The extruders need not be piggy backed (i.e., the extruders are stacked together, facing the same direction). The extruders may be arranged in a nose to nose configuration, which means the extruders are arranged so that they are facing each other, with the head sitting between the extruders.

Each extruder 110, 120, 130, 140 typically comprises a cylindrically shaped body 11 that houses an internal screw 12. As the screw 12 rotates, the rubber is advanced forward through the main body. The rubber is masticated as it is worked on via the screw 12. Each extruder 110, 120, 130, 140 preferably has a different rubber or elastomer that is being extruded. Each rubber or elastomer stream exits each extruder screw and passes into a respective flow channel 210, 220, 230, 240 of an extruder head assembly 200. Thus there is one flow channel for each extruder screw. Each elastomer stream exits the flow channel and is fed into a splice bar assembly 300.

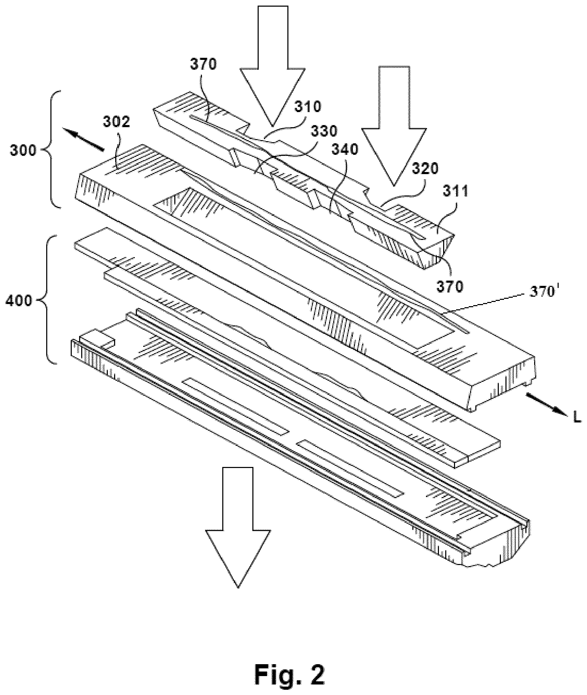

The splice bar assembly 300 as shown in Figure 2 comprises a preferably rectangular shaped bar 302. The splice bar 302 preferably comprises a preferably rectangular shaped removable insert 311. Alternatively, the splice bar 302 and the insert 311 may be a single piece. The rectangular shaped bar 302 (and the insert 311) has a longitudinal axis L that extends along the width of the bar. When the insert is inserted into the rectangular shaped bar 302, a plurality of flow passages 310, 320, 330, 340 are formed. The material fed into the passages 310, 320 respectively may be the same or different and also the material fed into the passages 330, 340 respectively may be the same or different. In the embodiment of Fig. 2, the material fed into the passages 310 and 320 respectively is preferably the same and the material fed into the passages 330 and 340 respectively is preferably the same but preferably different from the material fed into passages 310, 320 respectively. Fig. 2 shows that the rear face of the insert 311 has at least one groove 370 that is positioned between the two flow channels 310, 320 on the one hand side and the two flow channels 330, 340 on the other hand side. The width of the groove 370 may vary along its length for instance as shown. Furthermore, there may be optionally at least one further groove 370' on the rear face of the bar 302. This at least one further groove may be located on the rear face of the insert 311 or, as shown in Fig. 2, on the rear face of the splice bar 302 in an area other than on the rear face of the splice bar insert 311. This further groove 370' may also vary in its width along its length for instance as shown.

In one embodiment, a different type of elastomer is fed through each extruder 110, 120, 130, 140 the flow of which feeds into flow passages 310, 320, 330, 340 respectively.

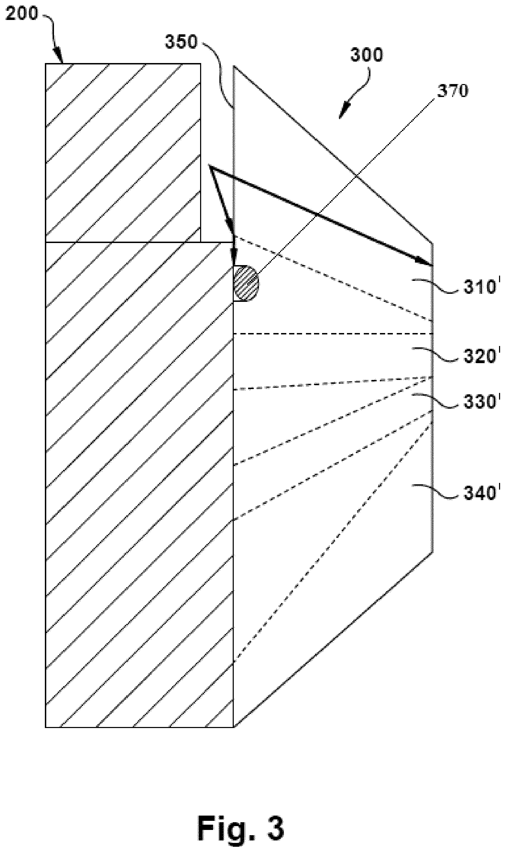

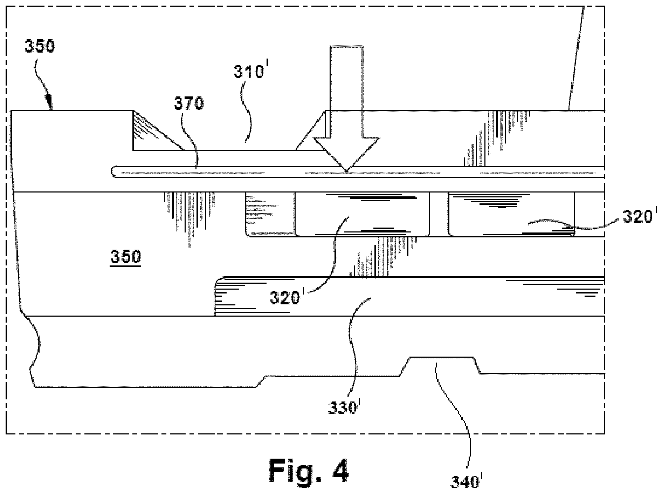

Figure 3 illustrates of a second embodiment of a splice bar design in cross-section. The rear face 350 of the splice bar 302 has at least one groove 370 that is positioned between the two flow channels 310', 320'. The splice bar 302 or the splice bar assembly 300 further comprises a flow channel 330' and a flow channel 340'. Optionally, a further groove may be provided between the flow channel 320' and the flow channel 330' and/or between the flow channel 330' and the flow channel 340' (not shown in Fig. 3 and Fig. 4). Fig. 4 shows a view of the splice bar of Fig. 3 onto the rear face 350 of the splice bar and into the flow direction. In Fig. 4, flow channel 320' is shown to be split into two parts with a stiffening bar between both parts.

The material fed into the passages 310', 320' respectively may be the same or different and also the material fed into the passages 330', 340' respectively may be the same or different. In the embodiment of Fig. 3, preferably a different type of elastomer is fed through each extruder 110, 120, 130, 140 the flow of which feeds into flow passages 310', 320', 330', 340' respectively. The elastomer fed into flow passage 310' may be a tread wing rubber composition for forming a tread wing (also called a miniskirt), the elastomer fed into flow passage 320' may be a first tread cap rubber composition for forming a first tread cap layer, the elastomer fed into flow passage 330' may be a second tread cap rubber composition for forming a second, radially more inner tread cap layer and the elastomer fed into flow passage 340' may be a tread base rubber composition for forming a tread base layer. In this case, the groove 370 serves to avoid that rubber from the flow passage 310' flows into the flow passage 320'.

Preferably, the groove 370 and/or the further groove 370' in the embodiment of Fig. 2 or Fig. 3 respectively has a thickness (or width) in the range of from 4 to 7 millimeters and a depth in the range of from 4 to 7 millimeters.

The rear face 350 in the embodiment of Fig. 2 or Fig. 3 respectively may comprise additional grooves that separate the flow channels from one another.

The groove 370 (and to some extend also the further groove 370') in the embodiments of Fig. 2 or Fig. 3 respectively functions to capture excess flow from one channel, preventing it from flowing into an adjacent channel. As the compound remains in the groove 370, it will increase in hardness as it cures, forming a type of "o ring" seal, which prevents further compound from passing the gap. Thus, the groove 370 in the rear face 350 of the splice bar 302 prevents smear or unwanted leakage of compound from passing into a neighboring flow channel. After the compounds exit the flow passages 310, 320, 330, 340 or the flow passages 310', 320', 330', 340' respectively, the flow passes through the die 400, forming a multi-layered composite.

Upon cleaning or inspection, the status of the groove 370 and/or of the further groove 370', i.e. the extend the groove 370 and/or the further groove 370' is filled with elastomer, composite or material, is an indicator of extrusion performance. Thus, if the groove 370, 370' is empty, this means the assembly is fluid tight, with no leakage. If the groove 370, 370' is fully or partially filled with elastomer, it is a warning that indicates a potential extrusion issue and suggests corrective action. The extruder assembly in accordance with the invention therefore allows it for instance to avoid or reduce the smear of an extruded tread wing compound (or miniskirt compounds) over an co-extruded tread cap compound during the extrusion process.

## Claims

1. An extruder assembly for forming a multi-layered composite, the extruder assembly comprising an extruder head assembly (200) having a first and second flow passage (210, 220, 230, 240), a first and second extruder (110, 120, 130, 140) in fluid communication with the respective first and second flow passage (210, 220, 230, 240), a splice bar assembly (300) comprising a splice bar (302), the splice bar assembly (300) or the splice bar (302) having a first and second passageway (310, 320, 330, 340) extending from a rear side (350) to an outlet side of the splice bar assembly (300) when viewed in the flow direction of the extruder assembly and communicating flow from the first and second passageway (310, 320, 330, 340) to an outlet die (400), **characterized in that** the splice bar (302) further comprises at least one groove (370) located on the rear side (350) of the splice bar (302), the at least one groove (370) being positioned between the first and second passageway (310, 320, 330, 340) when viewed from the rear side (350) of the splice bar (302), wherein the groove (370) presents no passage for material from the rear side to the outlet side of the splicebar (302).

2. The extruder assembly of claim 1 wherein the groove (370) extends in alignment with the longitudinal axis of the splice bar (302).

3. The extruder assembly of claim 1 or 2 wherein the groove (370) has a round or semicircular cross-sectional shape.

4. The extruder assembly of at claim 1 or 3 wherein the groove (370) extends in alignment with the transverse axis of the splice bar (302).

5. The extruder assembly of at least one of the previous claims wherein the groove (370) extends from one end of the splice bar (302) to the opposite end.

6. The extruder assembly of at least one of the previous claims wherein the first passageway (310) of the splice bar (302) is configured and located for receiving a miniskirt compound.

7. The extruder assembly of at least one of the previous claims wherein the second passageway (320) of the splice bar (302) is configured and located for receiving a tread cap compound or a first tread cap compound.

8. The extruder assembly of at least one of the previous claims wherein the groove (370) extends between the first and second passageway (310, 320).

9. The extruder assembly of at least one of the previous claims wherein the splice bar (302) comprises a removable splice bar insert (311) and wherein the splice bar insert (311) comprises said groove (370).

10. The extruder assembly of at least one of the previous claims wherein the groove (370) has a thickness or width in the range of from 4 to 7 millimeters and/or wherein the groove (370) has a depth in the range of from 4 to 7 millimeters.

11. The extruder assembly of claim 3 wherein the groove (370) has a radius in the range of from 1.5 to 3.5 millimeters.

12. The extruder assembly of at least one of the previous claims wherein the splice bar assembly (300) or the splice bar (302) has at least four passageways (310, 320, 330, 340) and/or only one or only two grooves (370).

13. A method of manufacturing a tire tread, the method comprising providing an extruder assembly in accordance with at least one of the previous claims and using said extruder assembly to extrude a multi-layered tire tread rubber composite.

14. The method of claim 13 wherein the multi-layered tire tread rubber composite is extruded as a strip and comprises at least one tread cap layer and a tread base layer.

15. A method of monitoring the extrusion performance of the extruder assembly in accordance with at least one of the previous claims wherein the status of the groove (370) with respect to to which extend it is filled with material extruded by the extruder assembly is used as indicator of the extrusion performance extruder assembly.

## Patentansprüche

1. Extruderanordnung zum Ausbilden eines mehrschichtigen Verbundstoffs, wobei die Extruderanordnung eine Extruderkopfanordnung (200), die einen ersten und einen zweiten Strömungsdurchlass (210, 220, 230, 240) aufweist, einen ersten und einen zweiten Extruder (110, 120, 130, 140) in Fluidkommunikation mit dem jeweiligen ersten und zweiten Strömungsdurchlass (210, 220, 230, 240), und eine Spleißstangenanordnung (300) umfasst, die eine Spleißstange (302) umfasst, wobei die Spleißstangenanordnung (300) oder die Spleißstange (302) einen ersten und einen zweiten Durchgang (310, 320, 330, 340) aufweist, die sich aus einer Rückseite (350) zu einer Auslassseite der Spleißstangenanordnung (300) erstrecken, wenn in der Strömungsrichtung der Extruderanordnung betrachtet, und eine Strömung aus dem ersten und dem zweiten Durchgang (310, 320, 330, 340) zu einer Auslassdüse (400) kommunizieren, **dadurch gekennzeichnet, dass** die Spleißstange (302) ferner wenigstens eine auf der Rückseite (350) der Spleißstange (302) gelegene Rille (370) umfasst, wobei die wenigstens eine Rille (370) zwischen dem ersten und dem zweiten Durchgang (310, 320, 330, 340) angeordnet ist, wenn von der Rückseite (350) der Spleißstange (302) betrachtet, wobei die Rille (370) keinen Durchlass für Material von der Rückseite zu der Auslassseite der Spleißstange (302) darstellt.

2. Extruderanordnung nach Anspruch 1, wobei sich die Rille (370) in Ausrichtung mit der Längsachse der Spleißstange (302) erstreckt.

3. Extruderanordnung nach Anspruch 1 oder 2, wobei die Rille (370) eine runde oder eine halbkreisförmige Querschnittsform aufweist.

4. Extruderanordnung nach Anspruch 1 oder 3, wobei die Rille (370) sich in Ausrichtung mit der Querachse der Spleißstange (302) erstreckt.

5. Extruderanordnung nach wenigstens einem der vorhergehenden Ansprüche, wobei die Rille (370) sich aus einem Ende der Spleißstange (302) zu dem gegenüberliegenden Ende erstreckt.

6. Extruderanordnung nach wenigstens einem der vorhergehenden Ansprüche, wobei der erste Durchgang (310) der Spleißstange (302) zum Aufnehmen einer Minimantelverbindung konfiguriert und gelegen ist.

7. Extruderanordnung nach wenigstens einem der vorhergehenden Ansprüche, wobei der zweite Durchgang (320) der Spleißstange (302) zum Aufnehmen einer Laufflächendeckverbindung oder einer ersten Laufflächendeckverbindung konfiguriert und gelegen ist.

8. Extruderanordnung nach wenigstens einem der vorhergehenden Ansprüche, wobei die Rille (370) sich zwischen dem ersten und dem zweiten Durchgang (310, 320) erstreckt.

9. Extruderanordnung nach wenigstens einem der vorhergehenden Ansprüche, wobei die Spleißstange (302) einen abnehmbaren Spleißstangeneinsatz (311) umfasst, und wobei der Spleißstangeneinsatz (311) die Rille (370) umfasst.

10. Extruderanordnung nach wenigstens einem der vorhergehenden Ansprüche, wobei die Rille (370) eine Dicke oder eine Breite in dem Bereich von 4 bis 7 Millimeter aufweist und/oder wobei die Rille (370) eine Tiefe in dem Bereich von 4 bis 7 Millimeter aufweist.

11. Extruderanordnung nach Anspruch 3, wobei die Rille (370) einen Radius in dem Bereich von 1,5 bis 3,5 Millimeter aufweist.

12. Extruderanordnung nach wenigstens einem der vorhergehenden Ansprüche, wobei die Spleißstangenanordnung (300) oder die Spleißstange (302) wenigstens vier Durchgänge (310, 320, 330, 340) und/oder nur einen oder nur zwei Rillen (370) aufweist.

13. Verfahren zum Herstellen einer Reifenlauffläche, wobei das Verfahren ein Bereitstellen einer Extruderanordnung nach wenigstens einem der vorhergehenden Ansprüche und ein Verwenden der Extruderanordnung, um einen mehrschichtigen Reifenlaufflächenkautschukverbundstoff zu extrudieren, umfasst.

14. Verfahren nach Anspruch 13, wobei der mehrschichtige Reifenlaufflächenkautschukverbundstoff als ein Streifen extrudiert wird und wenigstens eine Laufflächendecklage und eine Laufflächenbasislage umfasst.

15. Verfahren zum Überwachen der Extrusionsleistung der Extruderanordnung nach wenigstens einem der vorhergehenden Ansprüche, wobei der Zustand der Rille (370), hinsichtlich des Ausmaßes, in dem sie mit durch die Extruderanordnung extrudiertem Material gefüllt ist, als Indikator der Extrusionsleistung der Extruderanordnung verwendet wird.

## Revendications

1. Assemblage d'extrudeuse destiné à la formation d'un composite multicouche, l'assemblage d'extrudeuse comprenant un assemblage de tête d'extrudeuse (200) possédant un premier et un deuxième passage d'écoulement (210, 220, 230, 240), une première et une deuxième extrudeuse (110, 120, 130, 140) mises en communication par fluide avec le premier et le deuxième passage d'écoulement respectif (210, 220, 230, 240), un assemblage de barre de jonction (300) permettant d'obtenir une épissure comprenant une barre de jonction (302) permettant d'obtenir une épissure, l'assemblage de barre de jonction (300) permettant d'obtenir une épissure ou la barre de jonction (302) permettant d'obtenir une épissure possédant un premier et un deuxième passage (310, 320, 330, 340) s'étendant à partir d'un côté arrière (350) jusqu'à un côté de sortie de l'assemblage de barre de jonction (300) permettant d'obtenir une épissure lorsqu'on regarde dans la direction d'écoulement de l'assemblage d'extrudeuse et établissant une communication par écoulement à partir du premier et du deuxième passage (310, 320, 330, 340) dans la direction d'une filière de sortie (400), **caractérisé en ce que** la barre de jonction (302) permettant d'obtenir une épissure comprend en outre au moins une rainure (370) disposée sur le côté arrière (350) de la barre de jonction (302) permettant d'obtenir une épissure, ladite au moins une rainure (370) étant disposée entre le premier et le deuxième passage (310, 320, 330, 340), lorsqu'on regarde à partir du côté arrière (350) de la barre de jonction (302) permettant d'obtenir une épissure ; dans lequel la rainure (370) ne présente aucun passage pour de la matière à partir du côté arrière jusqu'au côté sortie de la barre de jonction (302) permettant d'obtenir une épissure.

2. Assemblage d'extrudeuse selon la revendication 1, dans lequel la rainure (370) s'étend en alignement avec l'axe longitudinal de la barre de jonction (302) permettant d'obtenir une épissure.

3. Assemblage d'extrudeuse selon la revendication 1 ou 2, dans lequel la rainure (370) possède une configuration en coupe transversale de forme ronde ou de forme semi-circulaire.

4. Assemblage d'extrudeuse selon la revendication 1 ou 3, dans lequel la rainure (370) s'étend en alignement avec l'axe transversal de la barre de jonction (302) permettant d'obtenir une épissure.

5. Assemblage d'extrudeuse selon au moins une des revendications précédentes, dans lequel la rainure (370) s'étend à partir d'une extrémité de la barre de jonction (302) permettant d'obtenir une épissure jusqu'à l'extrémité opposée.

6. Assemblage d'extrudeuse selon au moins une des revendications précédentes, dans lequel le premier passage (310) de la barre de jonction (302) permettant d'obtenir une épissure est configuré et est disposé pour la réception d'un composé sous la forme d'une minijupe.

7. Assemblage d'extrudeuse selon au moins une des revendications précédentes, dans lequel le deuxième passage (320) de la barre de jonction (302) permettant d'obtenir une épissure est configuré et est disposé pour la réception d'un composé sous la forme d'une chape de bande de roulement ou d'un premier composé sous la forme d'une chape de bande de roulement.

8. Assemblage d'extrudeuse selon au moins une des revendications précédentes, dans lequel la rainure (370) s'étend entre le premier et le deuxième passage (310, 320).

9. Assemblage d'extrudeuse selon au moins une des revendications précédentes, dans lequel la barre de jonction (302) permettant d'obtenir une épissure comprend une pièce rapportée amovible (311) de barre de jonction permettant d'obtenir une épissure ; et dans lequel la pièce rapportée amovible (311) de barre de jonction permettant d'obtenir une épissure comprend ladite rainure (370).

10. Assemblage d'extrudeuse selon au moins une des revendications précédentes, dans lequel la rainure (370) possède une épaisseur ou une largeur dans la plage de 4 à 7 mm et/ou dans lequel la rainure (370) possède une profondeur dans la plage de 4 à 7 mm.

11. Assemblage d'extrudeuse selon la revendication 3, dans lequel la rainure (370) possède un rayon dans la plage de 1,5 à 3,5 mm.

12. Assemblage d'extrudeuse selon au moins une des revendications précédentes, dans lequel l'assemblage de barre de jonction (300) permettant d'obtenir une épissure ou la barre de jonction (302) permettant d'obtenir une épissure possède au moins quatre passages (310, 320, 330, 340) et/ou seulement une ou seulement deux rainures (370).

13. Procédé de fabrication d'une bande de roulement de bandage pneumatique, le procédé comprenant le fait de procurer un assemblage d'extrudeuse selon au moins une des revendications précédentes et le fait d'utiliser ledit assemblage d'extrudeuse pour extruder un composite multicouche de caoutchouc de bande de roulement de bandage pneumatique.

14. Procédé selon la revendication 13, dans lequel le composite de caoutchouc multicouche de bande de roulement de bandage pneumatique est extrudé sous la forme d'une bande et comprend au moins une couche faisant office de chape de bande de roulement et une couche faisant office de base de bande de roulement.

15. Procédé de surveillance de la performance d'extrusion de l'assemblage d'extrudeuse selon au moins une des revendications précédentes, dans lequel on utilise l'état de la rainure (370) en ce qui concerne l'étendue de son remplissage avec la matière extrudée par l'assemblage d'extrudeuse, comme indicateur de la performance d'extrusion de l'assemblage d'extrudeuse.
